# EUROPEAN PATENT SPECIFICATION

(11) **EP 2 325 413 B1**
(45) Date of publication and mention of the grant of the patent: **04.06.2014**
(21) Application number: 10192117.9
(22) Date of filing: 22.11.2010
(51) Int. Cl.: E04F 17/06, F24F 13/18

(54) **A multilayer structure frontally closing a transparent surface in a building for natural ventilation and lighting**
Mehrschichtige Struktur zum frontseitigen Abschließen einer transparenten Oberfläche in einem Gebäude zur natürlichen Belüftung und Beleuchtung
Structure multicouche fermant frontalement une surface transparente dans un immeuble pour ventilation et éclairage naturels

(30) Priority: 24.11.2009 IT RM20090616
(43) Date of publication of application: 25.05.2011
(73) Proprietor: Universita' Degli Studi "G. d'Annunzio" Chieti-Pescara, 66013 Chieti (IT)
(72) Inventor: Zazzini, Paolo, 66013 Chieti (IT); Baroncini, Carlo, 66013 Chieti (IT); Chella, Fabrizio, 65122, Pescara (IT); Boccia, Oreste, 65013 Città S. Angelo (PE) (IT)
(74) Representative: Leone, Mario

(56) References cited:
- DE-A1- 2 632 669
- DE-U1- 29 713 554
- DE-U1- 29 821 747

## Description

The present invention is related to a multilayer structure frontally closing a transparent surface in a building, namely windows and the like, apt to be externally placed, fixed to a building outside wall, for proving the building inside with natural ventilation and lighting. Generally speaking, this kind of multilayer structure comprises removable frame leaning against said transparent surface, the multilayer structure supporting and defining a layer sequence made of different panels and interspaces.

Document DE 29 713 554 discloses a frame to be installed in front of a window to regulate the temperature of incoming air.

In particular, such a structure is intended for glass surfaces facing toward underground spaces, i.e. spaces located below the ground or the road level, e.g. the inner spaces of cavities or the interspaces between the building and a ground raising.

The multilayer structure, beyond the closing, has to carry out also the function of lighting the inner space of the building with natural light and of proving sufficient natural ventilation.

Document DE 298 21 747 discloses an aircraft ventilation system without frame and without an upper opening connecting the internal interspace with the interior environment.

The known panels, referred to all the above outlined functions, do not have a satisfying performance, making the underground spaces uninhabitable and unfit to hold normal activities related to the studying, working and living as well.

The present invention is intended to remedy to the drawback embodied by the above insufficient performances.

To this purpose, the above multilayer structure according to the present invention defines layer sequence comprising, from inside to outside:
- an internal interspace surmounted by a transparent cover, such internal interspace communicating with the internal environment by means of lower and upper openings and with the external environment by means of an upper opening placed above the transparent surface;
- a first layer of insulating material, the internal interspace being defined by the transparent surface of the building and the wall on one side and said insulating material on the other side, said insulating material being covered by high reflecting material on the side facing the internal interspace;
- an external interspace; and
- an external layer provided with two reclosable external openings, one in the upper portion and one in the lower portion of the multilayer structure, said external openings being suitable to be closed in a winter state and allowing an air flow within in a summer state for naturally cooling and for draining the inner air.

The main advantage of the multilayer structure according to the present invention lies in allowing an effective ventilation both in summer and in winter, at the same time achieving a suitable natural lighting of the inside space.

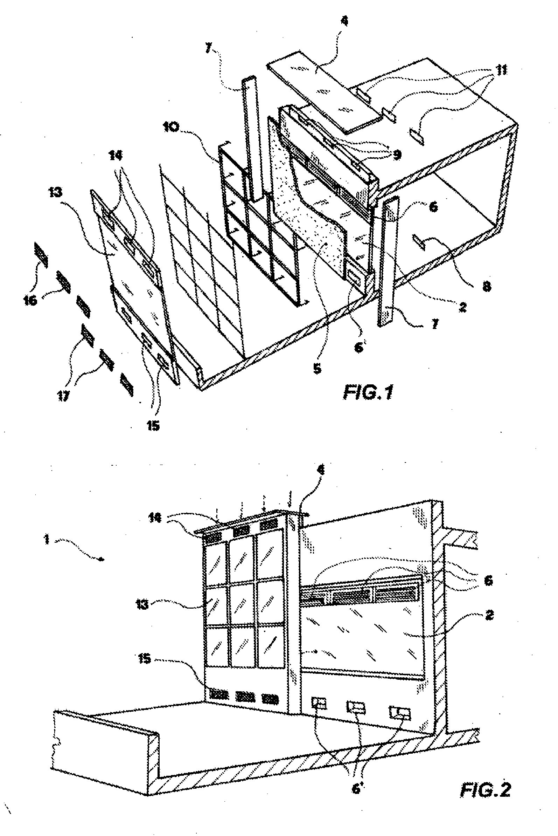

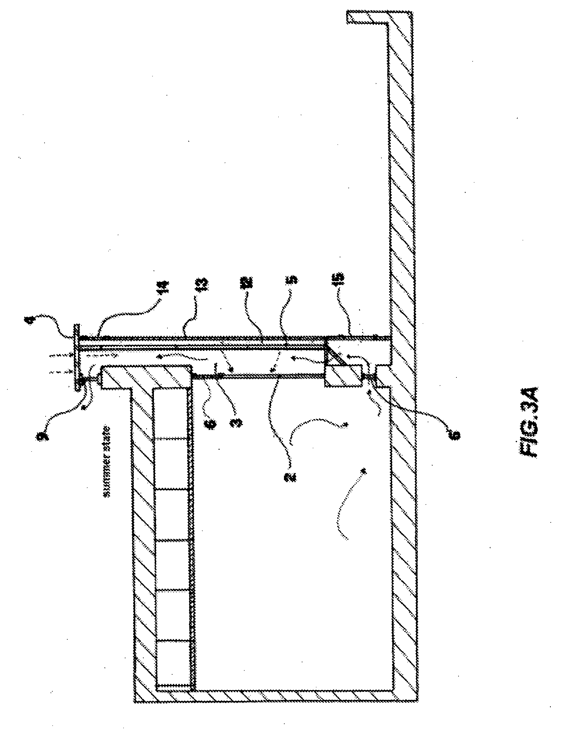

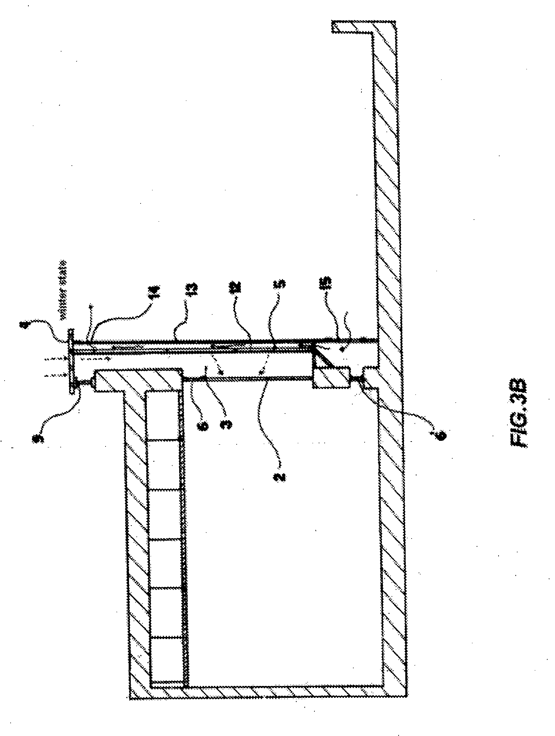

The present invention will be hereinafter disclosed according to a preferred embodiment thereof, given to an exemplificative and non limitative purpose with reference to the annexed drawings wherein:
**●** Figure 1 is a perspective and exploded view of the multilayer structure according to the present invention;
**●** Figure 2 shows a perspective view of the structure of figure 1 after the complete installation thereof; and
**●** Figures 3A and 3B show an elevation section of the structure of figure 1 in summer and winter state respectively.

With reference to the drawings, a multilayer structure of the present embodiment is herein disclosed and indicated as a whole by 1. It is carried out by the application of a removable prefabricated article, fixed at a transparent surface 2 of a building wall.

In the drawings, a transparent surface is shown, having a conventional height and a continuous lateral development, placed at the underground level to the building wall.

However, such a structure is suitable for any kind of window receiving lighting from the above and not from the front, regardless the shape and the size thereof.

For a window having a conventional size, the overall width of the structure may be limited to 66 cm.

The structure 1 comprises a layer sequence which, for clarity sake, are depicted from inside to outside, i.e. from the panel adjacent to the window to the outer panel. Some parts of the structure are also incorporated into the window itself and into the surrounding walls.

Hence, the above mentioned layer sequence comprises a first interspace 3, which is adjacent to the window 2 that has indicatively a thickness of about 50 cm.

The first interspace 3 is surmounted by a transparent cover 4, made of in a transparent material, e.g. polycarbonate or the like.

The first interspace 3is defined by a grate-shaped frame 10 supporting a first layer 5, made of a sandwiched insulating material which may indicatively have an overall thickness of 4 cm.

Therefore, the internal interspace 3 is defined by the transparent surface 2 of the building and the wall on one side and by said insulating material of the first layer 5 on the other side.

Said insulating material is covered by a high reflecting material on the side facing the internal interspace 3, carrying out the function of directing the natural light captured by said transparent cover 4 to the inner building space.

To an exemplificative purpose, said high reflecting material may be 3M^{®} Radiant Mirror^{®} film, which is a multilayer optical film formed by hundreds of transparent polymeric layers, deposited on a substrate with a micrometric precision. Due to the optical interference of the different micro-layers, the reflectivity of such a material is close to 99% regardless the incidence angle of the light.

The internal environment, i.e. the inner space of the building and the first interspace 3 are put in communication by means of lower and upper openings. Then, the first interspace 3 is put in communication with the external environment by means of an upper opening placed above the transparent surface.

The lower and the upper openings 6, 6' are protected by respective lower and upper reclosable gratings 8 intended to operate as a closure.

Above the window 2, further upper openings 9 are provided, putting in communication the first interspace 3 with the external environment, in turn protected by a reclosable grating 11 intended to operate as a closure.

The structure 1 further comprises side walls 7 laterally delimiting the first interspace 3, both coated with a highly reflecting material such as 3M^{®} Radiant Mirror Film.

The above openings 6, 6' and 9 can have a minimum height of 10 cm, at the same level of the external profile of the existing windowsill of the building roof. They can make the air circulate for the ventilation requested both in the winter and in the summer state.

The multilayer structure 1 then comprises a second external interspace 12, by way of example with a thickness of 10 cm, suitable for the circulation of air in the summer state, for the natural cooling, and for the disposal of the internal air in case of external application of the structure.

The second interspace 12 is upperly delimited by the above covering plate 4 made of transparent polycarbonate or glass, by way of example having a thickness of 5-15 mm, mounted on an external closing panel 13, intended to be opaque along a height of 90 cm (at the same horizontal level of the windowsill of the window 2) and transparent in the upper portion thereof. The external closing panel 13 is provided with external openings 14, 15 in the upper and in the lower part thereof, allowing an effective air circulation, protected by reclosable gratings 16, 17 which can be operate as a closure.

In general, the external layer 13 is either opaque as above described in case of underground structure, or transparent in case of externally facing structure.

To this purpose, in case of external application of the structure in winter state, it is requested to prevent the air circulation inside the second interspace 12, which in turn will operate as an effective removing means for the heat in summer state. In this connection the surface finishing of the external surface of the inner insulating layer 5 is externally dark painted, in order to enhance the greenhouse effect.

On the glass surface of the window 2 a diffusing material film may be removably applied, in particular a OLF^{®} type film (Optical Lighting Film) produced by 3M^{®}.

This kind of diffusing film is made in transparent polycarbonate having a plurality of optical prisms on one side and a smooth surface on the other opposite side, to create an optimal light diffusion, able to generate an effective natural light diffusion introduced to provide suitable condition of illumination comfort, also preventing annoying phenomena of visual dazzling.

The transparent surface on which the present multilayer structure is applied is provided with further gratings in the lower part, which in case can be opened to carry out a change of air.

The comprehensive system should be totally removable, while the openings through the building wall, suitably covered by standard gratings, in case can be closed with a suitable closure just to restore in any moment the original appearance of the building.

Anyway, the above openings are operated through the curtain walling without damaging the building bearing structure.

To the above disclosed multilayer structure a man skilled in the art, in order to meet further and contingent requirements, can introduce several modification and changes, anyway all encompassed by the protection scope of the present invention as defined by the annexed claims.

## Claims

1. A multilayer structure (1) frontally closing a transparent surface in a building and externally fixed to a wall, such a multilayer structure comprising a removable frame (10) leaning against said transparent surface (2), the multilayer structure supporting and defining a layer sequence comprising, from inside to outside:
• an internal interspace (3) surmounted by a transparent cover (4), such internal interspace (3) communicating with the internal environment by means of lower (6) and upper (6') openings and with the external environment by means of an upper opening (9) placed above the transparent surface (2);
• a first layer (5) of insulating material, the internal interspace (3) being defined by the transparent surface (2) of the building and the wall on one side and-said insulating material on the other side, said insulating material being covered by high reflecting material on the side facing the internal interspace (3);
• an external interspace (12); and
• an external layer (13) provided with two reclosable external openings (14, 15), one in the upper portion and one in the lower portion of the multilayer structure, said external openings (14, 15) being suitable to be closed in a winter state and allowing an air flow within in a summer state for naturally cooling and for draining the inner air.

2. The structure (1) according to claim 1, wherein said high reflecting material is a multilayer optical film formed by hundreds layers of transparent polymer, deposited on a substrate for determining an optical interference effect between the different layers.

3. The structure (1) according to claim 1, wherein the external layer (13) is opaque in case of underground structure or transparent in case of externally facing structure.

4. The structure (1) according to claim 1, wherein said external openings (14, 15) are protected by reclosable gratings (16, 17) intended to operate as a closure.

5. The structure (1) according to claim 1, wherein said first insulating material layer (5) is externally dark painted, in order to enhance the greenhouse effect.

6. The structure (1) according to claim 1, wherein a diffusing material film can be removably applied on the glass surface of the window (2).

7. The structure (1) according to claim 6, wherein the diffusing material film is made of transparent polycarbonate formed by a plurality of optical prisms on one side and by a smooth surface on the other side.

## Patentansprüche

1. Eine Mehrschicht-Struktur (1), die eine transparente Oberfläche in einem Gebäude frontal verschließt und von außen an einer Wand befestigt ist, wobei die Mehrschicht-Struktur einen entfernbaren Rahmen (10) umfasst, der gegen die transparente Oberfläche (2) lehnt, wobei die Mehrschicht-Struktur eine Schichtfolge unterstützt und definiert, die von innen nach außen umfasst:
- einen inneren Zwischenraum (3), der durch eine transparente Abdeckung (4) überwunden wird, wobei der innere Zwischenraum (3) mit einer inneren Umgebung durch untere (6) und obere (6') Öffnungen und mit der äußeren Umgebung durch eine obere Öffnung (9), die über der transparente Oberfläche (2) kommuniziert;
- eine erste Schicht (5) aus isolierendem Material, wobei der inner Zwischenraum (3) durch die transparente Oberfläche (2) des Gebäudes und die Wand an einer Seite und durch das isolierende Material auf der anderen Seite definiert ist, wobei das isolierende Material an der Seite, die dem inneren Zwischenraum (3) zugewandt ist, durch ein hochreflektierendes Material abgedeckt ist;
- einen äußeren Zwischenraum (12); und
- eine äußere Schicht (13), die mit zwei wiederverschließbaren externen Öffnungen (14, 15) versehen ist, wobei eine in dem oberen Teil und eine in dem unteren Teil der Mehrschicht-Struktur vorgesehen ist, wobei die externen Öffnungen (14, 15) geeignet sind, um in einem Winterzustand verschlossen zu werden und in einem Sommerzustand darin einen Luftstrom zur natürlichen Kühlung und für das Ablassen der inneren Luft zu erlauben.

2. Struktur (1) gemäß Anspruch 1, wobei das hochreflektierende Material ein mehrschichtiger optischen Film ist, der durch hunderte Schichten aus transparentem Polymer gebildet ist, aufgebracht auf einem Substrat zur Bestimmung eines optischen Interferenz-Effekts zwischen den unterschiedlichen Schichten.

3. Struktur (1) gemäß Anspruch 1, wobei die externe Schicht (13) im Fall einer Unterbodenstruktur opak ist oder im Fall einer nach außen gerichteten Struktur transparent ist.

4. Struktur (1) gemäß Anspruch 1, wobei die externen Öffnungen (14, 15) durch wiederverschließbare Gitter (16, 17), die als Verschluss arbeiten sollen, geschützt sind.

5. Struktur (1) gemäß Anspruch 1, wobei die erste Schicht (5) aus isolierendem Material nach außen dunkel gestrichen ist, um den Glashaus-Effekt zu verstärken.

6. Struktur (1) gemäß Anspruch 1, wobei ein Film aus streuendem Material lösbar auf der Glassoberfläche des Fensters (2) aufgebracht sein kann.

7. Struktur (1) nach Anspruch 6, wobei der Film aus streuendem Material aus transparentem Polykarbonat hergestellt ist, gebildet durch eine Vielzahl optischer Prismen an einer Seite und durch eine glatte Oberfläche auf der anderen Seite.

## Revendications

1. Structure multicouche (1) qui ferme frontalement une surface transparente dans un immeuble et fixée de manière externe sur un mur, ladite structure multicouche comprenant une armature mobile (10) qui repose contre ladite surface transparente (2), la structure multicouche supportant et définissant une séquence de couches qui comprend, de l'intérieur vers l'extérieur :
- un espace intérieur (3) surmonté par un capot transparent (4), ledit espace intérieur (3) communiquant avec l'environnement interne à l'aide d'ouvertures inférieures (6) et supérieures (6'), et avec l'environnement externe à l'aide d'une ouverture supérieure (9) placée au-dessus de la surface transparente (2) ;
- une première couche (5) de matériau isolant, l'espace intérieur (3) étant défini par la surface transparente (2) de l'immeuble et par le mur d'un côté et ledit matériau isolant de l'autre côté, ledit matériau isolant étant recouvert par un matériau hautement réfléchissant sur le côté tourné vers l'espace intérieur (3) ;
- un espace extérieur (12) ; et
- une couche externe (13) munie de deux ouvertures externes refermables (14, 15), une dans la partie supérieure et une dans la partie inférieure de la structure multicouche, lesdites ouvertures externes (14, 15) étant adaptées pour être fermées l'hiver et permettant une circulation de l'air pendant l'été afin d'assurer un refroidissement naturel et d'évacuer l'air intérieur.

2. Structure (1) selon la revendication 1, dans laquelle ledit matériau hautement réfléchissant est un film optique multicouche formé de centaines de couches de polymère transparent, déposé sur un substrat afin de déterminer un effet d'interférence optique entre les différentes couches.

3. Structure (1) selon la revendication 1, dans laquelle la couche externe (13) est opaque en cas de structure souterraine ou transparente en cas de structure tournée vers l'extérieur.

4. Structure (1) selon la revendication 1, dans laquelle lesdites ouvertures externes (14, 15) sont protégées par des grilles refermables (16, 17) destinées à faire office de fermeture.

5. Structure (1) selon la revendication 1, dans laquelle ladite première couche de matériau isolant (5) est peinte de couleur sombre à l'extérieur, afin d'améliorer l'effet de serre.

6. Structure (1) selon la revendication 1, dans laquelle un film en matériau de diffusion peut être appliqué de manière amovible sur la surface en verre de la fenêtre (2).

7. Structure (1) selon la revendication 6, dans laquelle le film en matériau de diffusion est composé de polycarbonate transparent formé par une pluralité de prismes optiques d'un côté, et par une surface lisse de l'autre côté.
